# EUROPEAN PATENT APPLICATION

(11) **EP 4 641 512 A1**
(43) Date of publication of application: **29.10.2025**
(21) Application number: 25169747.0
(22) Date of filing: 10.04.2025
(51) Int. Cl.: G06V 10/22, G06V 20/52

(54) **DETECTING OBJECTS IN AN APRON AREA OF AN AIRPORT**

(30) Priority: 22.04.2024 IN 202411031715
(71) Applicant: Honeywell International Inc., Charlotte, NC 28202 (US)
(72) Inventor: ESWARA, Lalitha M., Charlotte, 28202 (US); GUPTA, Anchal, Charlotte, 28202 (US); PANDE, Kaivalya S., Charlotte, 28202 (US)
(74) Representative: Haseltine Lake Kempner LLP

(57) **Abstract**

Devices, methods, and systems for detecting objects in an apron area of an airport are described herein. One system includes a camera sensor device configured to capture images of an airport apron area, a LIDAR sensor device configured to detect an aircraft entering the apron, and a computing device configured to, prior to the aircraft entering the apron, divide a portion of an image of the apron captured by the camera sensor device into a number of sub-portions that are irregular slices of the image and detect whether an object is present in each respective sub-portion. The computing device can, upon the LIDAR sensor device detecting the aircraft entering the apron, determine whether to divide a portion of an image of the apron captured by the camera sensor device into a number of sub-portions or consider the entire image to detect whether an object is present in the image.

## Description

### Technical Field

The present disclosure relates to devices, methods, and systems for detecting objects in an apron area of an airport.

### Background

An apron area of an airport can include and/or refer to the area(s) of the airport where aircraft are parked, loaded and unloaded, boarded, refueled, and/or maintained. For instance, an apron area of an airport can include a designated area for parking (e.g., docking) an aircraft, such as a stand or gate.

To ensure the safe operation of aircraft at an airport, it is important to keep the apron area free of objects (e.g., obstacles) prior to and during the docking process. For instance, unnoticed objects in the apron area, including small objects (e.g., objects as small as 30 centimeters (cm) by 30 cm or 50 cm by 50 cm), can be sucked into the engines of the aircraft and/or be collided with by the aircraft, which can damage the aircraft.

### Brief Description of the Drawings

Figure 1 illustrates a system for detecting objects in an apron area of an airport in accordance with an embodiment of the present disclosure.
Figure 2 illustrates a flow diagram showing some components of a system for detecting objects in an apron area and some functions of the system in accordance with an embodiment of the present disclosure.
Figure 3 illustrates a flow diagram showing some components of a system for detecting objects in an apron area and some functions of the system in accordance with an embodiment of the present disclosure.
Figure 4 illustrates a flow diagram showing some components of a system for detecting objects in an apron area and some functions of the system in accordance with an embodiment of the present disclosure.
Figure 5 illustrates a conceptual example of an image of an apron area that has been divided into a number of sub-portions in accordance with an embodiment of the present disclosure.
Figure 6 illustrates a flow diagram showing some components of a system for detecting objects in an apron area and some functions of the system in accordance with an embodiment of the present disclosure.
Figure 7 illustrates a flow diagram showing some components of a system for detecting objects in an apron area and some functions of the system in accordance with an embodiment of the present disclosure.
Figure 8 illustrates a computing device for detecting objects in an apron area of an airport in accordance with an embodiment of the present disclosure.

### Detailed Description

Devices, methods, and systems for detecting objects in an apron area of an airport are described herein. One system includes a camera sensor device configured to capture images of an apron area of an airport, a light detection and ranging (LIDAR) sensor device configured to detect an aircraft entering the apron area of the airport, and a computing device. The computing device is configured to, prior to the aircraft entering the apron area, divide (e.g., slice) a portion (e.g., patch) of an image of the apron area captured by the camera sensor device into a number of sub-portions that are irregular slices of the image, and detect whether an object (e.g., obstacle) is present in each respective one of the number of sub-portions. The computing device is configured to, upon the LIDAR sensor device detecting the aircraft entering the apron area, determine whether to divide a portion of an image of the apron area captured by the camera sensor device into a number of sub-portions (e.g., irregular slices) or consider the entire image to detect whether an object is present in the image.

Embodiments of the present disclosure can quickly and accurately detect small objects (e.g., obstacles) from long distances in an apron area of an airport both prior to an aircraft entering the apron area and while the aircraft is entering the apron area (e.g., during the docking process). For example, embodiments of the present disclosure can detect a 30 cm by 30 cm object from 70 meters (m) away, and a 50 cm by 50 cm object from 100 m away. Embodiments of the present disclosure can further utilize an image slicing mechanism that slices an image of an apron area of an airport in a non-uniform manner (e.g., based on the vanishing point row of the image and its adjacent sub-portions). Accordingly, embodiments of the present disclosure can help avoid collisions between small objects and aircraft in the apron area and prevent small objects from being sucked into the engines of aircraft in the apron area, thereby ensuring safe operation aircraft in the apron area of the airport.

In the following detailed description, reference is made to the accompanying drawings that form a part hereof. The drawings show, by way of illustration, how one or more embodiments of the disclosure may be practiced.

These embodiments are described in sufficient detail to enable those of ordinary skill in the art to practice one or more embodiments of this disclosure. It is to be understood that other embodiments may be utilized and that process, computerized, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

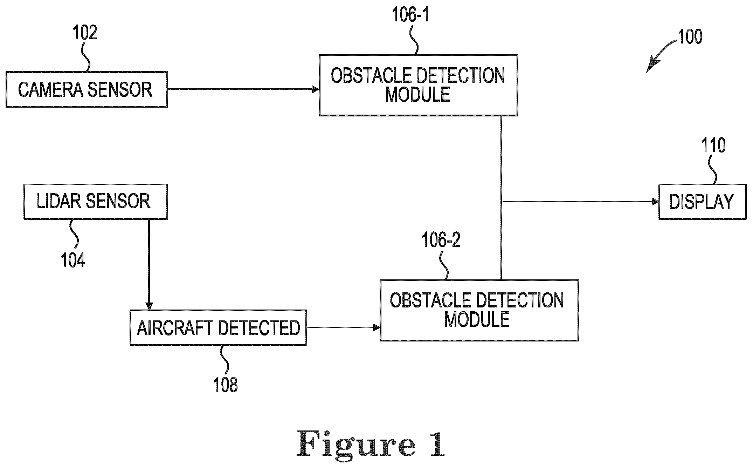

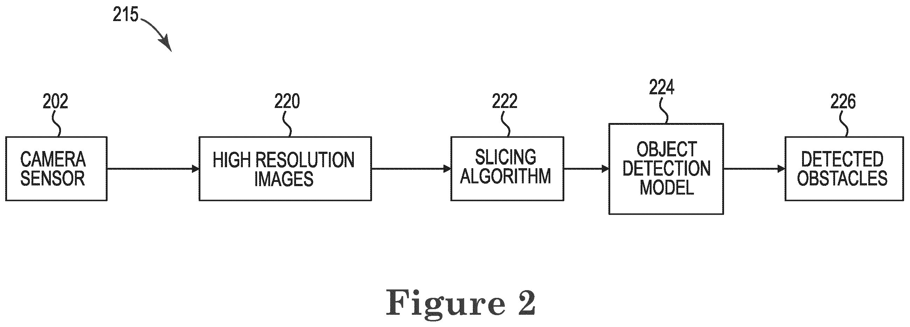

The figures herein follow a numbering convention in which the first digit or digits correspond to the drawing figure number and the remaining digits identify an element or component in the drawing. Similar elements or components between different figures may be identified by the use of similar digits. For example, 102 may reference element "02" in Figure 1, and a similar element may be referenced as 202 in Figure 2.

As used herein, "a" or "a number of" something can refer to one or more such things, and "a plurality of" can refer to more than one of such things. For example, "a number of slices" can refer to one or more slices, and "a plurality of slices" can refer to two or more slices. Additionally, the designator "N" as used herein, particularly with respect to reference numerals in the drawings, indicates that one or more of the particular feature so designated can be included with embodiments of the present disclosure.

Figure 1 illustrates a system 100 for detecting objects in an apron area of an airport in accordance with an embodiment of the present disclosure. System 100 can be an aircraft guidance and docking system such as, for instance, an automated visual docking guidance system (VDGS).

As used herein, an "apron area" of an airport can include and/or refer to any area of the airport where aircraft are parked, loaded and unloaded, boarded, refueled, and/or maintained. For instance, an apron area of an airport can include a designated area for parking (e.g., docking) an aircraft, such as a stand or gate. For instance, a lead-in line can indicate to the pilot of an aircraft the correct path to follow to position the aircraft in the correct position and orientation within the apron area (e.g., to dock the aircraft at a gate). These lead-in lines can be painted on the apron and/or can be virtual lines provided on a display viewed by the pilot on a pilot unit computing device. In arrangements where the apron area is used with multiple aircraft types, lead-in lines can be provided for each respective type of aircraft.

As shown in Figure 1, system 100 can include a camera sensor device 102 and a light detection and ranging (LIDAR) sensor device 104. Camera sensor device 102 and LIDAR sensor device 104 can be located at or near (e.g., adjacent) the apron area of the airport, such that at least a portion of the apron area is within the field of view of camera sensor device 102 and LIDAR sensor device 104. For instance, camera sensor device 102 and LIDAR sensor device 104 can be located at or near a stand or gate of the airport. Camera sensor device 102 can be, for instance, a high-resolution camera sensor device.

Although camera sensor device 102 and LIDAR sensor device 104 are illustrated as separate devices in Figure 1, embodiments of the present disclosure are not so limited. For example, in some embodiments, camera sensor device 102 and LIDAR sensor device 104 can be combined in a single device, such as a single sensor array.

Camera sensor device 102 and LIDAR sensor device 104 can capture (e.g., collect) information (e.g., sensor data) from their respective positions that can aid in detecting objects (e.g., obstacles) in the apron area, as will be described further herein. For example, camera sensor device 102 can capture images (e.g., high-resolution visual images of more than 8 mega-pixel resolution with 3 channels) of the apron area. Camera sensor device 102 can provide its data as image data captured from the imaging sensor that can be data representing frames of video data or one or more still images, for example, taken in a sequence.

Further, LIDAR sensor device 104 can detect that an aircraft has entered the apron area and capture data indicating the positioning of the aircraft in the apron area, which the LIDAR sensor device can use to determine (e.g., gauge) the distance of the aircraft from the LIDAR sensor device or other reference point (e.g., a stop point) in the apron area. LIDAR sensor device 104 can provide its data as a plurality of LIDAR data points (e.g., a LIDAR point cloud), that are collected as the LIDAR scans over surfaces of the aircraft in the apron area. The LIDAR data can also include distance information, indicating, for example, the distance of the front surface of the fuselage of the aircraft to the LIDAR sensor.

Although LIDAR sensing is discussed primarily herein, it should be noted that other light/radio based detection and ranging methodologies may be used to provide the functions of LIDAR sensor device 104 described herein. Suitable LIDAR sensing methodologies include those that scan the aircraft with a LIDAR or Radar sensor by sweeping the laser/radio signals across the aircraft in at least one of a horizontal or vertical direction or both. One suitable laser sensing system is a LIDAR system and a suitable radio signal scanning system is a Radio Detection and Ranging (RADAR) system.

As shown in Figure 1, system 100 can include obstacle detection modules 106-1 and 106-2. As described herein, a "module" (e.g., obstacle detection modules 106-1 and 106-2) can include computer readable instructions that can be executed by a processing resource (e.g., processor) to perform a particular function. A module can also include hardware, firmware, and/or logic that can perform a particular function. As used herein, "logic" is an alternative or additional processing resource to execute the actions and/or functions, described herein, which includes hardware (e.g., various forms of transistor logic, application specific integrated circuits (ASICs)), as opposed to computer executable instructions (e.g., software, firmware) stored in memory and executable by a processing resource.

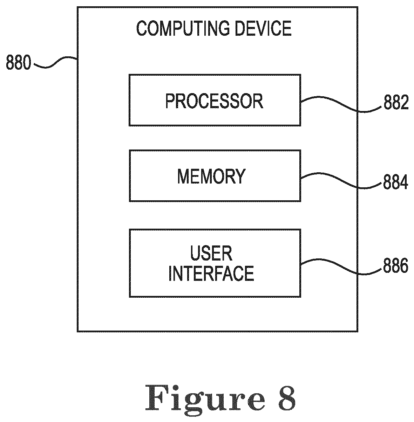

As an example, obstacle detection modules 106-1 and 106-2 can be included in a computing device, such as for instance, computing device 880 further described in connection with Figure 8. The computing device can be, for instance, a computing device of the VDGS. For example, the computing device can be a central docking system controller or a ramp docking system controller of the VDGS.

Obstacle detection modules 106-1 and 106-2 can provide two different paths that can be used to quickly and accurately detect and clear any small objects (e.g., obstacles) present in the apron area. As used herein, a "small" object can include and/or refer to an object whose dimensions are on an order of magnitude of centimeters (e.g., a 30 cm by 30 cm object, a 50 cm by 50 cm object, etc.). As used herein, an "obstacle" can include and/or refer to an object that should not be present in the apron area.

For example, at a particular amount of time (e.g., 5 to 10 minutes) before an aircraft is scheduled to enter the apron area (e.g., arrive at the gate), obstacle detection module 106-1 can be activated (e.g., triggered and/or switched on). During this time (e.g., before the aircraft enters the apron area), camera sensor device 102 can capture images of the apron area, and send (e.g., input and/or transmit) the images to obstacle detection module 106-1, as illustrated in Figure 1. Obstacle detection module 106-1 can use (e.g., process and/or analyze) these images to detect whether an object (e.g., obstacle) is present in the apron area. For example, obstacle detection module 106-1 can divide (e.g., slice) a portion (e.g., patch) of an image of the apron area captured by camera sensor device 102 into a number of sub-portions that are irregular slices of the image, and detect whether an obstacle is present in each respective one of the number of image sub-portions. The operation of obstacle detection module 106-1 will be further described herein.

Upon LIDAR sensor device 104 detecting that the aircraft has entered the apron area, and/or LIDAR sensor device 104 determining the aircraft is a particular distance (e.g., range) from the LIDAR sensor device or other reference point (e.g., a stop point) in the apron area, obstacle detection module 106-2 can be activated (e.g., triggered and/or switched on). For instance, LIDAR sensor device 104 can send a notification 108 to obstacle detection module 106-2 that the aircraft has been detected and/or is the particular distance away, as illustrated in Figure 1. The particular distance can be, for example, a set distance, such as 65 meters (m) or 75 m, or can be a user (e.g., operator) defined distance. During this time (e.g., while the aircraft is in the apron area), obstacle detection module 106-2 can use (e.g., process and/or analyze) images captured by camera sensor device 102 to detect whether an object (e.g., obstacle) is present in the apron area. For example, obstacle detection module 106-2 can determine whether to divide (e.g., slice) a portion of an image of the apron area captured by camera sensor device 102 into a number of sub-portions (e.g., irregular slices) or to consider the entire image to detect whether an obstacle is present in the apron area. The operation of obstacle detection module 106-2 will be further described herein.

The two-path approach to obstacle detection described herein can place a greater importance on detecting obstacles in the apron area that are closer to (e.g., nearby) areas of the apron where the aircraft enters. For instance, as the aircraft continues to move forward while entering the apron area, the obstacle detection may be already completed for obstacles at further distances, and as the aircraft moves toward camera sensor device 102 and LIDAR sensor device 104, smaller obstacles will occupy a larger amount of image pixels.

Camera sensor device 102 and LIDAR sensor device 104 can send their respective captured data (e.g., images of the apron area and notification 108) to obstacle detection modules 106-1 and 106-2 (e.g., to the computing device that includes the obstacle detection modules) via a wired or wireless network (not shown in Figure 1 for simplicity and so as not to obscure embodiments of the present disclosure). For example, the network can be a network relationship through which camera sensor device 102, LIDAR sensor device 104, and obstacle detection modules 106-1 and 106-2 can communicate with each other. Examples of such a network relationship can include a distributed computing environment (e.g., a cloud computing environment), a wide area network (WAN) such as the Internet, a local area network (LAN), a personal area network (PAN), a campus area network (CAN), or metropolitan area network (MAN), among other types of network relationships. For instance, the network can include a number of servers that receive information from, and transmit information to, camera sensor device 102, LIDAR sensor device 104, and obstacle detection modules 106-1 and 106-2 via a wired or wireless network.

As used herein, a "network" can provide a communication system that directly or indirectly links two or more computers and/or peripheral devices and allows users to access resources on other computing devices and exchange messages with other users. A network can allow users to share resources on their own systems with other network users and to access information on centrally located systems or on systems that are located at remote locations. For example, a network can tie a number of computing devices together to form a distributed control network (e.g., cloud).

A network may provide connections to the Internet and/or to the networks of other entities (e.g., organizations, institutions, etc.). Users may interact with network-enabled software applications to make a network request, such as to get a file or print on a network printer. Applications may also communicate with network management software, which can interact with network hardware to transmit information between devices on the network.

As shown in Figure 1, system 100 can include a display 110. For instance, display 110 can be a display of the computing device that includes obstacle detection modules 106-1 and 106-2. Upon obstacle detection module 106-1 or 106-2 detecting that an object is present in the apron area of the airport, an indication that the object has been detected, and/or the location of the detected object in the apron area, can be provided (e.g., reported) on display 110. For instance, display 110 can provide the indication and/or location to a user (e.g., operator) of the VDGS. An example of display 110 will be further described herein (e.g., in connection with Figure 8).

Figure 2 illustrates a flow diagram 215 showing some components of a system for detecting objects in an apron area of an airport and some functions of the system in accordance with an embodiment of the present disclosure. For instance, Figure 2 illustrates the path to detect objects in the apron area provided by obstacle detection module 106-1 described in connection with Figure 1.

As shown in Figure 2, high resolution images 220 of the apron area captured by camera sensor device 202 can be input into an image slicing algorithm 222 of obstacle detection module 106-1. Camera sensor device 202 can be, for instance, camera sensor device 102 previously described in connection with Figure 1, and high resolution images 220 of the apron area can be captured by camera sensor device 202 and input into image slicing algorithm 222 in a manner analogous to that previously described in connection with Figure 1.

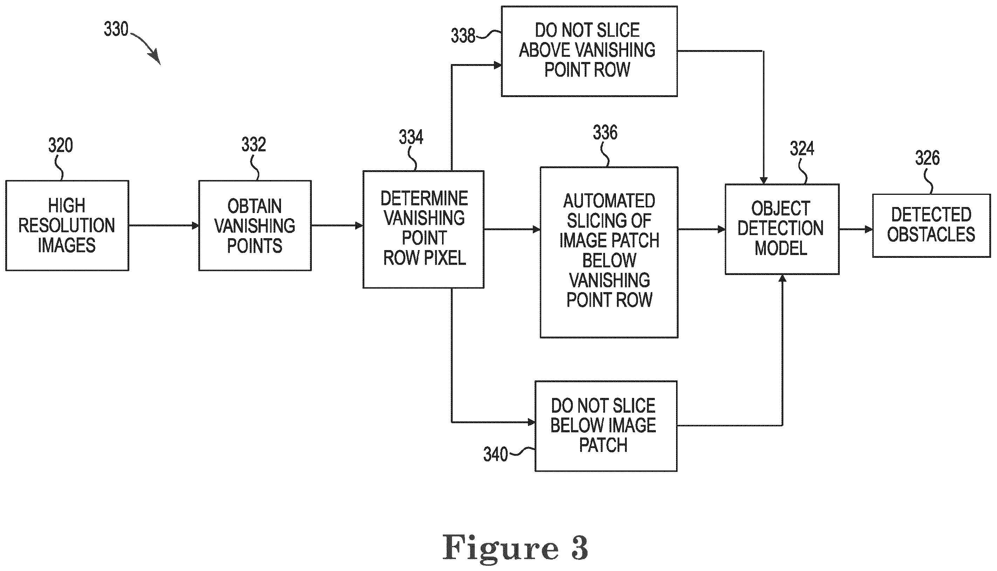

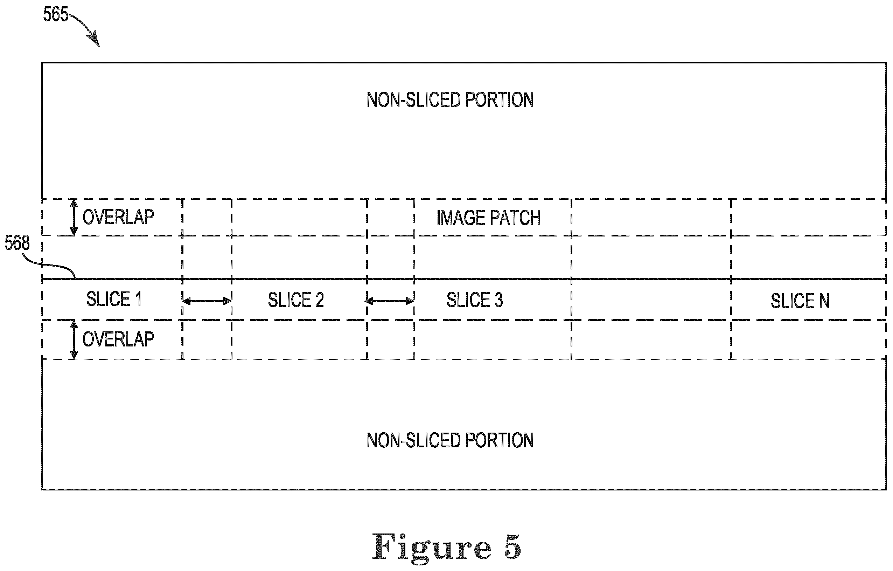

Slicing algorithm 222 can slice the high resolution images into a number of slices (e.g., a number of irregular slices). The operation of slicing algorithm 222 will be further described herein (e.g., in connection with Figure 3), and a conceptual example of a sliced image will be further described herein (e.g., in connection with Figure 5).

As shown in Figure 2, each respective image slice can be input into an object detection model 224, which can detect whether an obstacle is present in each respective image slice. Object detection model 224 can be and/or include, for example, a machine learning (e.g., deep learning) model, such as a YOLO (you only look once) object detection model, that can be trained using objects that may be typically found in an apron area of an airport. As an additional example, object detection model 224 can be and/or include an artificial intelligence (AI) model, such as a vision-language model (VLM) or an agnostic Al model such as a Grounding DINO object detection model, that can be used when such training data is not available.

Any (e.g., all) obstacles 226 detected by object detection model 224 can be reported. For instance, an indication and/or location of the detected obstacles 226 can be provided, as previously described herein (e.g., in connection with Figure 1). Further, object detection model 224 can be updated (trained) based on (e.g. using) the detected obstacles, as will be further described herein (e.g., in connection with Figure 8).

Figure 3 illustrates a flow diagram 330 showing some components of a system for detecting objects in an apron area and some functions of the system in accordance with an embodiment of the present disclosure. For instance, Figure 3 illustrates the operation of slicing algorithm 222 previously described in connection with Figure 2.

As shown in Figure 3, the vanishing points of high-resolution images 320 (e.g., high resolution images 220 previously described in connection with Figure 2) are obtained (e.g., estimated and/or found) at block 332. A vanishing point of an image 320 can refer to the point on the image plane where the two-dimensional perspective projections of mutually parallel lines in three-dimensional space appear to converge (e.g., the point in the image where the parallel lines appear to converge). Once the vanishing point of an image is obtained, the row pixel value of the vanishing point is determined at block 334, and further processing can be performed based on this value.

Next, it is determined which portion of the image needs to be divided into sub-portions (e.g. sliced), and which portion(s) of the image do not need to be sliced. This determination can be done automatically.

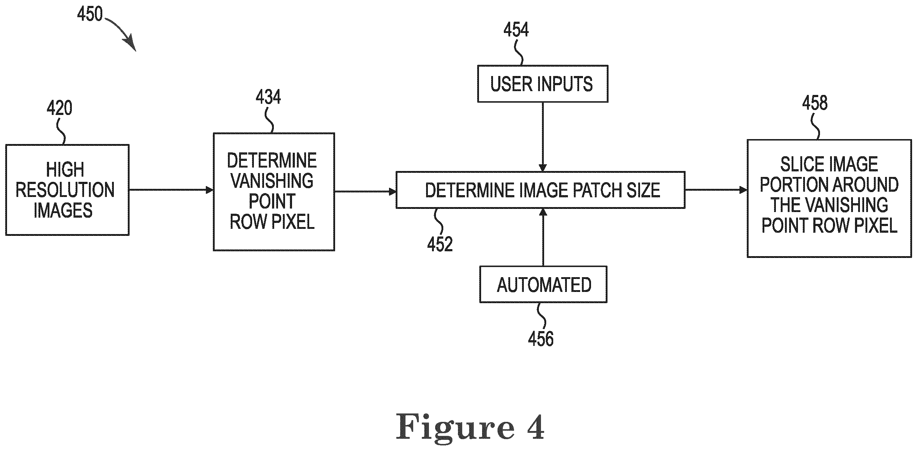

For example, a portion of the image (e.g., a percentage of image portion) can be defined around the vanishing point row pixel. This portion can be referred to herein as a "patch". An automated slicing of the portion of this patch below the vanishing point row pixel is performed at block 336. The determination of the size of the patch, and the number (e.g., quantity) of slices this portion of the patch is divided into, will be further described herein (e.g., in connection with Figure 4).

Other than the portion of the patch below the vanishing point row pixel, however, the rest of the image is not sliced. For instance, as illustrated at block 338, no slicing of the image is performed above the vanishing point row pixel, because this portion of the image corresponds to the horizon (e.g., non-apron area) of the image, and would not contain any obstacles to detect. Further, as illustrated at block 340, no slicing of the image is performed below the image patch, because this portion of the image corresponds to the portion of the apron that is close to the camera sensor device, and obstacles in this portion of the apron (e.g., near the camera) would occupy a greater number of pixels of the image and thus can be easily detected by the object detection model without slicing.

As shown in Figure 3, each respective image slice obtained at block 336 (e.g., the sliced portion of the image patch below the vanishing point row pixel) are input into object detection model 324 (e.g., object detection model 224 previously described in connection with Figure 2). Further, the remaining parts of the image that were not sliced at blocks 338 and 340 (e.g., the portion of the image above the vanishing point row pixel and the portion of the image below the image patch) are also input into object detection model 324.

As such, object detection model 324 can perform object detection on all parts of the image (e.g., not just the slices) to detect whether an obstacle is present in the apron area. For example, object detection model 324 can perform a batch processing of the sliced and non-sliced portions of the image, with all the image slices stacked as one batch. By performing such a batch processing, object detection model 324 can use weight sharing that can allow the object detection model 324 to make quicker inferences, which can in turn increase the speed (e.g., reduce the processing time) of the obstacle detection process. Any (e.g., all) obstacles 326 detected by object detection model 324 can be reported, as previously described herein.

Figure 4 illustrates a flow diagram 450 showing some components of a system for detecting objects in an apron area and some functions of the system in accordance with an embodiment of the present disclosure. For instance, Figure 4 illustrates the operation of determining the size of the image patch, and the number (e.g., quantity) of slices the portion of the image patch that is below the vanishing point row pixel of the image is divided into, previously described in connection with Figure 3.

As shown in Figure 4, the vanishing points of high resolution images 420 are obtained, and the row pixel value of a vanishing point of an image is determined at block 434, in a manner analogous to that previously described in connection with Figure 3.

At block 452, the size (e.g., the width and height) of the image patch is determined (e.g., computed). This determination can be done automatically, or based on (e.g., using) user (e.g., operator) input. The user can be, for example, a user of the VDGS.

For example, as shown in Figure 4, the size of the image patch can be determined based on user inputs 454. The user inputs 454 can include, for example, the height of the image patch, the width of the image patch, the amount of overlap of the image patch with the rest of the image, and/or portions (e.g., particular areas and/or regions) of the image chosen by the user that do or do not need to be sliced based on the operational conditions of the field (e.g., the apron area). The height and width of the image patch can be provided, for instance, as a percentage of the total height and width, respectively of the image patch. The overlap amount of the image patch can be provided, for instance, as a percentage of the image patch that overlaps with the rest of the image. The portions of the image that do or do not need to sliced can be provided, for instance, as a shape (e.g., a polygonal shape) drawn in the image by the user. The user inputs can be provided (e.g., manually input) by the user via a user interface, such as, for instance, display 110 previously described in connection with Figure 1 and/or user interface 886 further described in connection with Figure 8).

As an additional example, an automated determination of the size of the image patch can be made at block 456, as illustrated in Figure 4. The automated determination can be based on, for instance, the size of the apron area and/or the field of view of the camera sensor device that captured high resolution images 420. As an additional example, the automated determination can be based on the size of the obstacles to be detected.

At block 458, the portion (e.g., area) of the image around (e.g., below) the vanishing point row pixel is sliced based on the determined image patch size. The area may also be sliced based on the overlap.

Figure 5 illustrates a conceptual example of an image 565 of an apron area that has been divided (e.g. sliced) into a number of sub-portions (e.g., a number of irregular slices) in accordance with an embodiment of the present disclosure. For instance, image 565 can be an example of an image sliced using slicing algorithm 222 previously described in connection with Figure 2.

As shown in Figure 5, image 565 includes a vanishing point row pixel 568. Vanishing point row pixel 568 can be the row pixel value of the vanishing point of the image, as previously described herein.

As shown in Figure 5, an image patch has been defined around vanishing point row pixel 568, as represented by the shorter dashed lines illustrated in Figure 5. The image patch portion of image 565 slightly overlaps with the non-sliced portions of image 565, which are represented by the longer dashed lines, as illustrated in Figure 5.

As shown in Figure 5, the portion of the image patch that is below vanishing point row pixel 568 and does not overlap with the non-sliced portion of image 565 has been sliced into a number of irregular slices (e.g., slice 1, slice 2, slice 3, ... slice N). For instance, the upper boundary of each respective slice is the vanishing point row pixel 568, and the lower boundary of each respective slice is the top edge of the lower non-sliced portion of image 565, as illustrated in Figure 5. Further, each respective slice slightly overlaps with its neighboring slice(s) (e.g., slice 1 slightly overlaps with slice 2, slice 2 slightly overlaps with slices 1 and 3, etc.), as illustrated in Figure 5.

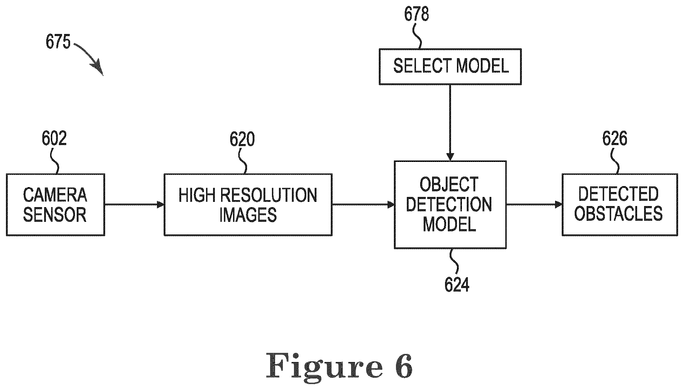

Figure 6 illustrates a flow diagram 675 showing some components of a system for detecting objects in an apron area and some functions of the system in accordance with an embodiment of the present disclosure. For instance, Figure 6 illustrates the path to detect objects in the apron area provided by obstacle detection module 106-2 described in connection with Figure 1.

As shown in Figure 6, high resolution images 620 of the apron area captured by camera sensor device 602 can be input into object detection model 624. Camera sensor device 602 can be, for instance, camera sensor device 102 previously described in connection with Figure 1, and high resolution images 620 of the apron area can be captured by camera sensor device 602 and input into object detection model 624 in a manner analogous to that previously described in connection with Figure 1. In the example illustrated in Figure 6, the image as a whole (e.g., the entire image, without having been divided into slices) is input to object detection model 624.

Object detection model 624 can be analogous to object detection model 224 described in connection with Figure 2. For example, object detection model 624 can perform object detection on the image as a whole to detect whether an obstacle is present in the apron area. In some examples, the object detection model (e.g., the type of the object detection model) can be selected by a user (e.g., operator), such as, for instance, a user of the VDGS, at block 678. The selection can be received via a user interface, such as, for instance, display 110 previously described in connection with Figure 1 and/or user interface 886 further described in connection with Figure 886). Any (e.g., all) obstacles 626 detected by object detection model 624 can be reported, as previously described herein.

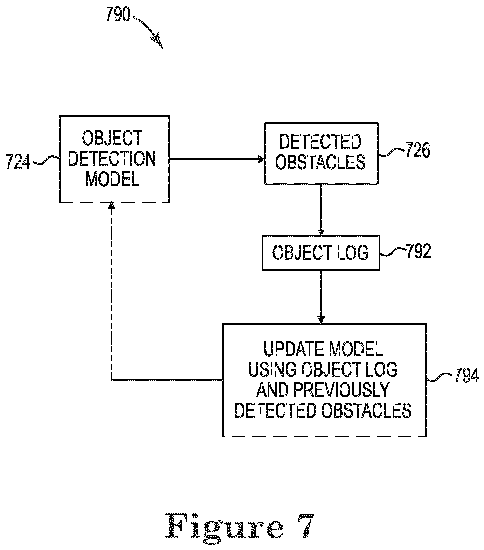

Figure 7 illustrates a flow diagram 790 showing some components of a system for detecting objects in an apron area and some functions of the system in accordance with an embodiment of the present disclosure. For instance, Figure 7 illustrates the operation of updating (e.g., training) object detection model 724 (e.g., object detection model 224 previously described in connection with Figure 2) based on (e.g. using) detected obstacles.

Object detection model 724 can be updated using a history-based analysis of obstacles detected by the object detection model. The update can be done by choosing and/or combining appropriate prompts for the update, or by incrementally updating (e.g., training) the model.

For example, object detection model 724 can detect obstacles 726 in images of an apron area of an airport, as previously described herein. Information about the detected obstacles can be stored in an object log 792, as illustrated in Figure 7. The information stored in object log 792 can include, for example, the positions and/or bounding boxes of the detected obstacles in the images.

Object detection model 724 can be updated (e.g., incrementally or responsive to a prompt) at block 794 using object log 792 (e.g., the information stored in the object log) and the previous obstacle detections performed by object detection model 724, as illustrated in Figure 7. Updating object detection model 724 in such a manner can improve the obstacle detection accuracy of the model.

Figure 8 illustrates a computing device 880 for detecting objects in an apron area of an airport in accordance with an embodiment of the present disclosure. As used herein, the term "computing device" refers to an electronic system having a processing resource, memory resource, and/or an application-specific integrated circuit (ASIC) that can process information. For example, computing device 880 can be a laptop computer, notebook computer, desktop computer, server, networking equipment (e.g., router, switch, etc.), or mobile device (e.g., smart phone, tablet, PDA, etc.), among other types of computing devices. However, embodiments of the present disclosure are not limited to a particular type of computing device. As used herein, a mobile device can include devices that are (or can be) carried and/or worn by a user. For example, a mobile device can be a phone (e.g., a smart phone), a tablet, a personal digital assistant (PDA), smart glasses, and/or a wrist-worn device (e.g., a smart watch), among other types of mobile devices.

In some embodiments, computing device 880 can be located at an airport. For example, computing device 880 can be a computing device of an automated VDGS of the airport. The computing device 880 can enable a user, such as an operator of the VDGS, to utilize the computing device 880 for detecting objects in an apron area of the airport according to embodiments of the present disclosure.

As shown in Figure 8, computing device 880 can include a memory 884 and a processor 882. Memory 884 can be any type of storage medium that can be accessed by processor 882 to perform various examples of the present disclosure. For example, memory 884 can be a non-transitory computer readable medium having computer readable instructions (e.g., computer program instructions) stored thereon that are executable by processor 882 to detect objects in an apron area of an airport in accordance with the present disclosure. That is, processor 882 can execute the executable instructions stored in memory 884 to detect objects in an apron area of an airport in accordance with the present disclosure. For instance, computing device 880 (e.g., processor 882 and/or memory 884) can include obstacle detection modules 106-1 and 106-2 previously described in connection with Figure 1.

Memory 884 can be volatile or nonvolatile memory. Memory 884 can also be removable (e.g., portable) memory, or non-removable (e.g., internal) memory. For example, memory 884 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disk read-only memory (CD-ROM)), flash memory, a laser disk, a digital versatile disk (DVD) or other optical disk storage, and/or a magnetic medium such as magnetic cassettes, tapes, or disks, among other types of memory.

Further, although memory 884 is illustrated as being located in computing device 880, embodiments of the present disclosure are not so limited. For example, memory 884 can also be located internal to another computing resource (e.g., enabling computer readable instructions to be downloaded over the Internet or another wired or wireless connection).

As shown in Figure 8, computing device 880 can include a user interface 886. A user (e.g., operator) of computing device 880, such as, for instance, an operator of the VDGS, can interact with computing device 880 via user interface 886. For example, user interface 886 can provide (e.g., display and/or present) information to the user of computing device 880, such as, for instance, obstacles detected in the apron area of the airport, as previously described herein. Further, user interface 886 can receive information from (e.g., input by) the user of computing device 880, as previously described herein.

In some embodiments, user interface 886 can be a graphical user interface (GUI) that can include a display (e.g., a screen), such as, for instance, display 110 previously described in connection with Figure 1, that can provide and/or receive information to and/or from the user of computing device 880. The display can be, for instance, a touch-screen (e.g., the GUI can include touch-screen capabilities). As an additional example, user interface 886 can include a keyboard and/or mouse the user can use to input information into computing device 880. Embodiments of the present disclosure, however, are not limited to a particular type(s) of user interface.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion and not a restrictive one. Combination of the above embodiments, and other embodiments not specifically described herein, will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A system (100) for detecting objects in an apron area of an airport, comprising:
a camera sensor device (102, 202, 602) configured to capture images of an apron area of an airport;
a light detection and ranging (LIDAR) sensor device (104) configured to detect an aircraft entering the apron area of the airport; and
a computing device (880), wherein:
the computing device (880) is configured to, prior to the aircraft entering the apron area:
divide a portion of an image of the apron area captured by the camera sensor device (102, 202, 602) into a number of sub-portions, wherein the number of sub-portions are irregular slices of the image; and
detect whether an object is present in each respective one of the number of sub-portions of the image; and
the computing device (880) is configured to, upon the LIDAR sensor device (104) detecting the aircraft entering the apron area, determine whether to divide a portion of an image of the apron area captured by the camera sensor device (102, 202, 602) into a number of sub-portions or consider the entire image to detect whether an object is present in the image.

2. The system of claim 1, wherein the computing device is configured to, upon detecting an object is present, provide an indication that the object has been detected to a user of the computing device.

3. The system of claim 1, wherein the computing device is configured to, upon detecting an object is present, provide a location of the detected object in the apron area to a user of the computing device.

4. The system of claim 1, wherein the computing device is configured to divide the portion of the image of the apron area captured by the camera sensor device into the number of sub-portions by:
inputting the image of the apron area into an image slicing algorithm (222); and
slicing, by the image slicing algorithm, the image into the number of sub-portions.

5. The system of claim 1, wherein the computing device is configured to detect whether an object is present in each respective one of the number of sub-portions of the image using an object detection model (224, 324, 624, 724).

6. The system of claim 5, wherein the computing device is configured to, upon detecting an object is present, update the object detection model based on the detected object.

7. The system of claim 1, wherein the computing device is configured to detect whether an object is present in other portions of the image of the apron area that were not divided into the number of sub-portions.

8. The system of claim 1, wherein the object to be detected is an object whose dimensions are on an order of magnitude of centimeters.

9. A method for detecting objects in an apron area of an airport, comprising:
capturing, by a camera sensor device (102, 202, 602), images of an apron area of an airport;
dividing, by a computing device (880), a portion of an image of the apron area captured by the camera sensor device (102, 202, 602) into a number of sub-portions, wherein the number of sub-portions are irregular slices of the image;
detecting, by the computing device (880), whether an object is present in each respective one of the number of sub-portions of the image;
detecting, by a light detection and ranging (LIDAR) sensor device (104), an aircraft entering the apron area of the airport; and
determining, by the computing device (880) upon the LIDAR sensor device (104) detecting the aircraft entering the apron area, whether to divide a portion of an image of the apron area captured by the camera sensor device (102, 202, 602) into a number of sub-portions or consider the entire image to detect whether an object is present in the image.

10. The method of claim 9, wherein the camera sensor device begins to capture the images of the apron area of the airport at a particular amount of time before the aircraft is scheduled to enter the apron area.

11. The method of claim 9, wherein the method includes dividing the portion of the image of the apron area captured by the camera sensor device into the number of sub-portions by:
obtaining a vanishing point of the image;
determining a row pixel value of the vanishing point of the image;
defining a portion of the image around the vanishing point row pixel; and
slicing the defined portion of the image below the vanishing point row pixel.

12. The method of claim 11, wherein:
no portion of the image of the apron area above the vanishing point row pixel is sliced; and
no portion of the image of the apron area below the defined portion of the image is sliced.

13. The method of claim 11, wherein defining the portion of the image around the vanishing point row pixel includes determining a size of the portion of the image around the vanishing point row pixel.

14. The method of claim 13, wherein the size of the portion of the image around the vanishing point row pixel is determined based on user inputs.

15. The method of claim 13, wherein the size of the portion of the image around the vanishing point row pixel is determined automatically.
